# EUROPEAN PATENT APPLICATION

(11) **EP 3 489 192 A1**
(43) Date of publication of application: **29.05.2019**
(21) Application number: 18208621.5
(22) Date of filing: 27.11.2018
(51) Int. Cl.: C01B 21/083, C01B 21/086, C01B 21/087

(54) **LITHIUM BIS(FLUOROSULFONYL)IMIDE COMPOSITION**

(30) Priority: 28.11.2017 JP 2017228259; 23.10.2018 JP 2018199510
(71) Applicant: Nippon Shokubai Co., Ltd., Osaka-shi, Osaka 541-0043 (JP); Morita Chemical Industries Co., Ltd., Osaka-shi, Osaka 541-0056 (JP)
(72) Inventor: MIZUNO, Hiroyuki, Suita-shi,, Osaka 564-8512 (JP); KATSUYAMA, Hiromoto, Suita-shi,, Osaka 564-8512 (JP); ITAYAMA, Naohiko, Suita-shi,, Osaka 564-8512 (JP)
(74) Representative: Enomoto, Kéi

(57) **Abstract**

To provide a composition in which when the composition is formed into a solution, the clogging of a filter is less likely to be caused, and the solution can be filtered in a short time. A composition comprising:
lithium bis(fluorosulfonyl)imide; and
an impurity, wherein
when the composition is dissolved in a mixed solvent obtained by mixing ethylene carbonate and ethyl methyl carbonate at a volume ratio of 3:7, to prepare a solution having a concentration of the lithium bis(fluorosulfonyl)imide of 1 M, and 50 mL of the solution is pressure-filtered at a pressure of 0.1 MPa using a membrane filter having a pore diameter of 0.2 µm and a filtration area of 47 mm φ, insoluble particles having an average particle diameter of 5 to 150 µm remain on the membrane filter.

## Description

### TECHNICAL FIELD

The present invention relates to a lithium bis(fluorosulfonyl)imide composition.

### BACKGROUND

Salts of fluorosulfonylimide or derivatives thereof such as lithium bis(fluorosulfonyl)imide are useful as intermediates for compounds having a N(SO₂F) group or a N(SO₂F)₂ group. In addition, they are compounds useful in various applications, such as being used as electrolytes, additives to the electrolytic solutions of batteries or capacitors, selective electrophilic fluorinating agents, photo-acid-generating agents, thermal acid-generating agents, near-infrared absorbing dyes, or the like (Patent Literature 1).

### Citation List

### Patent Literature

[Patent Literature 1] International Publication No. WO 2011/149095

Here, impurities derived from the raw materials, the production process, and the like are included in lithium bis(fluorosulfonyl)imide. In these impurities, those insoluble in a solvent used when lithium bis(fluorosulfonyl)imide is used as a solution are included, and such insoluble impurities may be dispersed in the solution as insoluble particles.

Therefore, usually, the operation of removing insoluble particles by performing filtration through a filter such as a membrane filter before use is performed on a solution of lithium bis(fluorosulfonyl)imide.

However, insoluble particles included in lithium bis(fluorosulfonyl)imide produced by a conventional production method such as the method described in Patent Literature 1 are fine particles, the average particle diameter of which is, for example, about 1.4 µm. Therefore, a problem is that when the filtration of the solution is performed, the filter causes clogging, and time is required for the filtration.

The present invention has been made in view of such circumstances, and it is an object of the present invention to provide a lithium bis(fluorosulfonyl)imide composition in which when the composition is formed into a solution, the clogging of a filter is less likely to be caused and the solution can be filtered in a short time.

### SUMMARY

The composition of the present invention is a composition comprising lithium bis(fluorosulfonyl)imide; and an impurity, wherein when the composition is dissolved in a mixed solvent obtained by mixing ethylene carbonate and ethyl methyl carbonate at a volume ratio of 3:7, to prepare a solution having a concentration of the lithium bis(fluorosulfonyl)imide of 1 M, and 50 mL of the solution is pressure-filtered at a pressure of 0.1 MPa using a membrane filter having a pore diameter of 0.2 µm and a filtration area of 47 mm φ, insoluble particles having an average particle diameter of 5 to 150 µm remain on the membrane filter.

It is preferable that an amount of the insoluble particles remaining on the above membrane filter be 1 to 20000 ppm by mass based on a total amount of the composition.

It is preferable that the above insoluble particles comprise lithium fluoride.

The composition of the present invention may contain lithium bis(fluorosulfonyl)imide; and lithium fluoride particles, and an average particle diameter of the lithium fluoride particles may be 5 to 150 µm.

In the above composition, it is preferable that a content of insoluble particles having a particle diameter of 5 µm or less be 5000 ppm by mass or less based on the total amount of the composition.

### EFFECT OF INVENTION

According to the present invention, it is possible to provide a lithium bis(fluorosulfonyl)imide composition in which when the composition is formed into a solution, the clogging of a filter is less likely to be caused, and the solution can be filtered in a short time.

### DETAILED DESCRIPTION

A composition according to this embodiment is a composition comprising lithium bis(fluorosulfonyl)imide (hereinafter also referred to as LiFSI) and impurities. When the composition is dissolved in a mixed solvent obtained by mixing ethylene carbonate and ethyl methyl carbonate at a volume ratio of 3:7, to prepare a solution having a concentration of the lithium bis(fluorosulfonyl)imide of 1 M, and 50 mL of the solution is pressure-filtered at a pressure of 0.1 MPa (gauge pressure) using a membrane filter having a pore diameter of 0.2 µm and a filtration area of 47 mm φ, insoluble particles having an average particle diameter of 5 to 150 µm remain on the membrane filter. "Insoluble" herein refers to, for example, solubility being 200 ppm by mass or less.

The above impurities included in the composition remain on the filter as insoluble particles after the above pressure filtration.

When the composition of this embodiment is formed into a solution, the average particle diameter of insoluble particles dispersed in the solution is relatively large, and therefore even when filtration is performed using a filter having a small pore diameter, the clogging of the filter is less likely to be caused, and the solution can be filtered in a short time. Therefore, large amounts of impurities can be efficiently removed by filtration.

From the viewpoint of being able to perform filtration more efficiently, the lower limit of the above average particle diameter of the insoluble particles is 5 µm, preferably 10 µm, more preferably 20 µm, and further preferably 30 µm. The upper limit of the average particle diameter of the insoluble particles may be 128 µm.

Examples of the measurement method of the average particle diameter include the image analysis of a scanning electron microscope image. The average particle diameter may be an average value obtained by extracting 250 particles from among insoluble particles at random and averaging their particle diameters.

As the particle diameter measurement method, the following method may be used for measurement. In other words, the LiFSI composition is dissolved in acetonitrile to prepare a 12% by mass LiFSI acetonitrile solution. Next, centrifugation is performed, and the particles are recovered. For the above solution, centrifugation at 2000 rpm for 15 minutes is performed, the supernatant is removed, acetonitrile of the removed volume is added, and centrifugation is performed under similar conditions. This operation is repeated five times, drying is performed in an 80°C vacuum drying furnace for 12 hours, and the insoluble particles are recovered. The obtained insoluble particles are dispersed in acetone, the dispersion is observed by a laser microscope (KEYENCE VK-9700), 1000 insoluble particles are selected at random, the particle diameters are measured, and the average particle diameter is calculated.

The particle diameter of the insoluble particle is the particle diameter of each insoluble particle in the longitudinal direction.

From the viewpoint of being able to further suppress the clogging of the filter, the amount of the insoluble particles remaining on the above membrane filter is preferably 1 to 20000 ppm by mass, more preferably 1 to 10000 ppm by mass, further preferably 5 to 7000 ppm by mass, still further preferably 5 to 6000 ppm by mass, and particularly preferably 10 to 1000 ppm by mass based on the total amount of the composition.

The content of insoluble particles having a particle diameter of 5 µm or less in the composition of this embodiment is preferably 5000 ppm by mass or less, more preferably 3000 ppm by mass or less, further preferably 2000 ppm by mass or less, still further preferably 1000 ppm by mass or less, particularly preferably 500 ppm by mass or less, very preferably 200 ppm by mass or less, and extremely preferably 100 ppm by mass or less based on the total amount of the composition, from the viewpoint of being able to more effectively suppress the clogging of the filter. The composition of this embodiment need not include insoluble particles having a particle diameter of 5 µm or less.

The composition of this embodiment is less likely to cause the clogging of the filter even if it includes insoluble particles having a particle diameter of 5 µm or less. The reason for this is not necessarily certain, but the present inventors consider that this is for the following reason. In other words, in the composition of this embodiment, the average particle diameter of the above insoluble particles is 5 to 150 µm, and therefore the composition of this embodiment includes large particles the particle diameter of which exceeds 5 µm. When the solution is filtered, there is a tendency that insoluble particles having a large particle diameter settle and deposit on the membrane filter first, and insoluble particles having a small particle diameter settle and deposit on the particles having a large particle diameter later. Therefore, it is considered that the particles having a small particle diameter are less likely to come into direct contact with the filter, and clogging tends to be able to be prevented.

The insoluble particles may comprise lithium fluoride. The content of lithium fluoride in the insoluble particles may be 90% by mass or more based on the total amount of the insoluble particles and may be 95% by mass or more. The insoluble particles may consist essentially of lithium fluoride. In other words, the composition of this embodiment may contain lithium bis(fluorosulfonyl)imide and lithium fluoride particles, and the average particle diameter of the lithium fluoride particles may be 5 to 150 µm.

It is preferable that the composition of this embodiment include lithium bis(fluorosulfonyl)imide as the main component. The content of lithium bis(fluorosulfonyl)imide may be 90% by mass or more based on the total amount of the composition and may be 95% by mass or more.

The above composition may include LiFSO₃. The content of LiFSO₃ in the composition is preferably 100 ppm by mass to 100000 ppm by mass, more preferably 500 ppm by mass to 50000 ppm by mass, and further preferably 1000 ppm by mass to 10000 ppm by mass based on the total amount of the composition from the viewpoint of suppressing increase in resistance when the composition is used for the electrolytic solution of a battery.

It is preferable that the above composition include essentially no water from the viewpoint of being able to suppress the deterioration of performance when using the composition as an electrolytic solution or the like. The water content of the composition is preferably 20 ppm by mass or less, more preferably 15 ppm by mass or less, and particularly preferably 10 ppm by mass or less based on the total amount of the composition.

It is preferable that the content of SO₄²⁻ anions be 500 ppm by mass or less in the above composition.

As the material of the above membrane filter, there is no particular limitation as long as it is usually used for the filtration of an electrolytic solution or the like, but from the viewpoint of heat resistance, chemical resistance, and the like, it is preferable that the material of the above membrane filter be polytetrafluoroethylene (PTFE).

The composition of this embodiment can be dissolved in a solvent and used as a solution. Examples of the applications of the solution include the electrolytic solutions of batteries, capacitors, or the like, selective electrophilic fluorinating agents, photo-acid-generating agents, thermal acid-generating agents, near-infrared absorbing dyes, and antistatic agents.

As the above solvent, there is no particular limitation as long as it is a solvent that dissolves lithium bis(fluorosulfonyl)imide, and examples of the solvent include carbonates such as dimethyl carbonate, ethyl methyl carbonate, ethylene carbonate, diethyl carbonate, propylene carbonate, butylene carbonate, and methyl ethyl carbonate, esters such as γ-butyrolactone and methyl formate, and ethers such as 1,2-dimethoxyethane and tetrahydrofuran. These solvents may each be used alone, or two or more types may be used in combination.

### [Production Method of Composition]

The composition of this embodiment can be produced by the method shown below.

In the production method of the composition of this embodiment, a mixture including bis(fluorosulfonyl)imide and lithium fluoride can be reacted to produce the above composition. Bis(fluorosulfonyl)imide and lithium fluoride produce lithium bis(fluorosulfonyl)imide by the reaction represented by the following reaction formula:

### [Chemical Formula 1]

The reaction temperature of the mixture including bis(fluorosulfonyl)imide and lithium fluoride is preferably 50°C or more, more preferably 80°C or more, further preferably 100°C or more, and particularly preferably 120°C or more. Examples of the reaction temperature include 180°C or less and 160°C or less, and the reaction can be performed even at 150°C or less or 140°C or less. When the reaction temperature is in the above range, there is a tendency that the reaction can be performed at a sufficient reaction rate while the decomposition of the product is suppressed. The pressure range of the above reaction is preferably 1250 hPa or less, more preferably 1150 hPa or less, further preferably 1050 hPa or less, and particularly preferably 1013 hPa or less. As the reaction time, 24 hours or less is preferable, 16 hours or less is more preferable, and 8 hours or less is further preferable.

The mixture including bis(fluorosulfonyl)imide and lithium fluoride may be aged after the reaction. The aging temperature is preferably 50°C or more, more preferably 80°C or more, further preferably 100°C or more, and particularly preferably 120°C or more from the viewpoint of allowing the reaction to proceed at a sufficient reaction rate. The aging temperature is preferably 180°C or less, more preferably 160°C or less, further preferably 150°C or less, and particularly preferably 140°C or less from the viewpoint of suppressing the decomposition of the product. It is preferable to perform aging while removing hydrogen fluoride at a pressure of 1013 hPa or less. The removal of hydrogen fluoride may be performed by introducing a gas into the system. Examples of the usable gas include inert gases such as nitrogen and argon, and dry air.

The devolatilization temperature of the mixture including bis(fluorosulfonyl)imide and lithium fluoride is preferably 50°C or more, more preferably 80°C or more, further preferably 100°C or more, and particularly preferably 120°C or more from the viewpoint of efficiently performing devolatilization. The devolatilization temperature is preferably 180°C or less, more preferably 160°C or less, further preferably 150°C or less, and particularly preferably 140°C from the viewpoint of suppressing the decomposition of the product. The pressure range of the above devolatilization is preferably less than 1013 hPa, more preferably 1000 hPa or less, further preferably 500 hPa or less, particularly preferably 200 hPa or less, and most preferably 100 hPa or less. In performing devolatilization, devolatilization may be performed while a gas is introduced into the system, or devolatilization may be performed using pressure reduction and gas introduction in combination.

At the reaction start time point, the total of the mass ratios of bis(fluorosulfonyl)imide and lithium fluoride to the entire above mixture is preferably 0.8 or more, more preferably 0.85 or more, further preferably 0.9 or more, and particularly preferably 0.95 or more.

A solvent may be added to the above mixture, but it is preferable not to add a solvent from the viewpoint of decreasing the amount of the residual solvent. As the amount of the solvent added, as the ratio to the total mass of the above mixture, for example, 0.10 or less is preferable, 0.05 or less is more preferable, and adding no solvent at all is most preferable.

The mixture after the mixture including bis(fluorosulfonyl)imide and lithium fluoride is reacted includes unreacted bis(fluorosulfonyl)imide, unreacted lithium fluoride, lithium bis(fluorosulfonyl)imide, and by-products. The total of the mass ratios of bis(fluorosulfonyl)imide, lithium fluoride, and lithium bis(fluorosulfonyl)imide to the entire mixture after the reaction is preferably 0.8 or more, more preferably 0.85 or more, further preferably 0.9 or more, and particularly preferably 0.95 or more.

The mixture after the mixture including bis(fluorosulfonyl)imide and lithium fluoride is reacted can include unreacted bis(fluorosulfonyl)imide and unreacted LiF, includes lithium bis(fluorosulfonyl)imide, and LiFSO₃ produced as a by-product, and may include F⁻ ions, HF, and the like. The production method of this embodiment may include the step of decreasing HF produced during production. Examples of the method for removing HF include a method in which an inert gas such as nitrogen or argon, or dry air is introduced into the system.

At the reaction start time point, the mol ratio of lithium included in lithium fluoride to bis(fluorosulfonyl)imide is preferably 0.8 or more and 1.2 or less, more preferably 0.9 or more and 1.1 or less, and further preferably around 1.0.

### [Drying and Powdering Step]

The mixture after the above reaction may be used as the above composition as it is, but it is preferable that the mixture be dried and powdered. As the average particle diameter of the powder, the average particle diameter is preferably 0.2 mm or more, more preferably 0.5 mm or more, further preferably 1 mm or more, and particularly preferably 3 mm or more because there is a tendency that the mixing of water can be suppressed during storage. The upper limit is not particularly limited, and, for example, 50 mm or less is preferable, 20 mm or less is more preferable, and 10 mm or less is more preferable. It is preferable that the obtained powder is stored under an atmosphere having a dew point of -60°C or less. In the case of such an environment, the mixing of water can be prevented.

The obtained powder is packaged using a bag making apparatus. As the bag for containing the powder, there is no particular limitation, but an Al laminate bag is preferable.

### EXAMPLES

The present invention will be specifically described below based on Examples, but the present invention is not limited to Examples.

### [Example 1]

905 g (5.00 mol) of liquid bis(fluorosulfonyl)imide (hereinafter also referred to as HFSI) and 132 g (5.1 mol) of solid LiF were charged into a stainless steel reaction container equipped with a nitrogen introduction tube and a reflux tube, to prepare a slurry reaction mixture.

When the temperature was increased to 150°C by heating while the reaction mixture was stirred, the lithium fluoride dissolved and a liquid reaction solution was obtained. Then, while nitrogen was blown into the reaction solution, reduced pressure devolatilization was performed at 100 hPa and 145 to 150°C for 5 hours. As a result, 892 g of a melt-like composition was obtained, and the composition was pressure-fed by nitrogen, and the melt of the composition was drawn into a container made of a perfluoroalkoxy fluororesin (PFA). The obtained melt was cooled, and then the composition was wrapped with a sheet made of polytetrafluoroethylene, and struck by a plastic hammer and pulverized to obtain a powdery composition.

### [Example 2]

905 g (5.0 mol) of liquid HFSI and 130 g (5.0 mol) of solid LiF were charged into a stainless steel reaction container equipped with a nitrogen introduction tube and a reflux tube, to prepare a slurry reaction mixture. When the temperature was increased to 150°C by heating while the reaction mixture was stirred, the lithium fluoride dissolved, and a liquid reaction solution was obtained. Then, while nitrogen was blown into the reaction solution, reduced pressure devolatilization was performed at 100 hPa and 145 to 150°C for 2 hours. As a result, 890 g of a melt-like composition was obtained, and the composition was pressure-fed by nitrogen, and the melt of the composition was drawn into a container made of PFA. The obtained melt was cooled, and then the composition was wrapped with a sheet made of polytetrafluoroethylene, and struck by a plastic hammer and pulverized to obtain a powdery composition.

### [Example 3]

1059 g (5.85 mol) of liquid HFSI and 130 g (5.0 mol) of solid LiF were charged into a stainless steel reaction container equipped with a nitrogen introduction tube and a reflux tube, to prepare a slurry reaction mixture. When temperature was increased to 150°Cby heating while the reaction mixture was stirred, the lithium fluoride dissolved, and a liquid reaction solution was obtained. Then, while nitrogen was blown into the reaction solution, reduced pressure heating was performed at 100 hPa and 145 to 150°C for 2 hours. As a result, 896 g of a melt-like composition was obtained, and the composition was pressure-fed by nitrogen and drawn into a container made of PFA. The obtained melt was cooled, and then the composition was wrapped with a sheet made of polytetrafluoroethylene, and struck by a plastic hammer and pulverized to obtain a powdery composition.

For the compositions of Examples 1 to 3, ¹⁹F-NMR measurement was performed according to the following conditions. As the internal standard substance, benzenesulfonyl fluoride was used. As a result, from the composition of any of Examples 1 to 3, a peak derived from lithium bis(fluorosulfonyl)imide (hereinafter also referred to as LiFSI) (δ 55.4 ppm, singlet), and a peak derived from LiFSO₃ (δ 40.1 ppm, singlet) were observed.

### [¹⁹F-NMR Measurement]

The measurement of ¹⁹F-NMR was performed under the following conditions:
Measuring apparatus: VNMRS 600 (manufactured by Varian Medical Systems, Inc.)
Deuterated solvent: acetonitrile-d₃
Analytical concentration: sample concentration; 12% by mass, internal standard; 3.6% by mass
Number of accumulations: 16 times

From the measurement results of ¹⁹F-NMR, the content of LiFSI in the compositions of Examples 1 to 3 was obtained by the following internal standard method. In other words, by comparing the amount of benzenesulfonyl fluoride added as the internal standard substance, and the integral value of the peak derived from this, with the integral value of the peak derived from LiFSI, the content of LiFSI in the sample was obtained. From the content of LiFSI obtained, and the concentration of the composition in the sample on which the measurement of ¹⁹F-NMR was performed (sample concentration), the content of LiFSI in the composition was calculated. In a similar manner, the content of LiFSO₃ in the composition was calculated.

### [Comparative Example 1]

### [Fluorosulfonylimide Synthesis Step (Fluorination Step)]

990 g of butyl acetate was charged into a reaction container A made of PYREX (registered trademark) (internal volume 5 L) equipped with a stirring apparatus, under a nitrogen gas flow. 110 g (514 mmol) of bis(chlorosulfonyl)imide was added dropwise to the charged butyl acetate at room temperature (25°C).

55.6 g (540 mmol, 1.05 equivalents based on bis(chlorosulfonyl)imide) of zinc fluoride was added to the obtained butyl acetate solution of bis(chlorosulfonyl)imide at a time at room temperature, and the mixture was stirred at room temperature for 6 hours until the zinc fluoride completely dissolved. The obtained solution will be referred to as a solution A below.

### [Cation Exchange Step 1 - Synthesis of Ammonium Salt]

297 g (4360 mmol, 8.49 equivalents based on bis(chlorosulfonyl)imide) of 25% by mass ammonia water was charged into a reaction container B made of PYREX (registered trademark) (internal volume 3 L) equipped with a stirring apparatus. While the ammonia water was stirred, the solution A was dropped and added to the reaction container B at room temperature. When the stirring was stopped after the completion of the dropping of the solution A, the reaction system separated into two layers, an aqueous layer and an organic layer. The aqueous layer including by-products such as zinc chloride was removed to obtain a butyl acetate solution of ammonium bis(fluorosulfonyl)imide that was the organic layer.

The measurement of ¹⁹F-NMR was performed (internal standard substance: trifluoromethylbenzene) using the obtained organic layer as a sample. In the obtained chart of ¹⁹F-NMR, a peak derived from ammonium bis(fluorosulfonyl)imide (δ 56.0 ppm) was observed. The concentration of ammonium bis(fluorosulfonyl)imide in the organic layer was obtained by the above-described internal standard method. From this, the crude yield of ammonium bis(fluorosulfonyl)imide was calculated as 416 mmol.

### [Cation Exchange Step 2 - Synthesis of Lithium Salt]

133 g (834 mmol in terms of Li) of a 15% by mass lithium hydroxide aqueous solution was added so that the amount of lithium was 2 equivalents to the ammonium bis(fluorosulfonyl)imide included in the obtained organic layer, and the mixture was stirred at room temperature for 10 minutes. Then, the aqueous layer was removed from the reaction system to obtain a butyl acetate solution of lithium bis(fluorosulfonyl)imide (hereinafter also referred to as LiFSI) that was the organic layer.

Using the obtained organic layer as a sample, it was confirmed by an ICP emission spectroscopic analysis method that the proton of fluorosulfonylimide was exchanged for a lithium ion.

In addition, ¹⁹F-NMR measurement was performed (internal standard substance: trifluoromethylbenzene) using the obtained organic layer as a sample. In the obtained chart of ¹⁹F-NMR, the peak of LiFSI was observed. The concentration of LiFSI in the organic layer was obtained by the above-described internal standard method. The concentration of LiFSI in the organic layer was 7% by mass (yield of organic layer: 994 g, yield of LiFSI: 69.6 g).

### [Concentration Step]

The solvent was partially distilled off from the organic layer obtained in the above cation exchange step 2, under reduced pressure, using a rotary evaporator ("REN-1000", manufactured by IWAKI CO., LTD.), to obtain 162 g of a concentrated solution of LiFSI (concentration: 43% by mass).

162 g of the above concentrated solution was added to a 500 mL separable flask equipped with a dropping funnel and a cooling tube and a distillation receiver. The pressure of the interior of the above separable flask was reduced to 667 Pa using a vacuum pump, and the separable flask was immersed in an oil bath heated to 55°C. Then, while the concentrated solution in the separable flask was stirred, heating was slowly performed to distill the butyl acetate that was the reaction solvent from the fluorosulfonylimide synthesis step. 1,2,4-Trimethylbenzene in the same amount of volume as the total amount of the liquid recovered in the distillation receiver for 10 minutes after distillation started was added to the separable flask as a poor solvent. Then, 1,2,4-trimethylbenzene in the same amount of volume as the distilled liquid was continuously added into the separable flask every 10 minutes to change the mixing ratio between butyl acetate (reaction solvent) and 1,2,4-trimethylbenzene in the system while further concentrating the reaction solution, thereby precipitating crystals of LiFSI. The above operation was repeated until the supernatant liquid in the separable flask became transparent, and then the flask was cooled to room temperature, and the obtained suspension of LiFSI crystals was filtered to obtain crystals of LiFSI. The time from the start of the heating of the above concentrated solution to the concentration step completion was 6 hours, and the time required until the crystal precipitation start was 2 hours.

Then, the obtained crystals were washed with a small amount of hexane and then transferred to a flat-bottomed vat, and reduced pressure drying was performed at 55°C and 667 Pa for 12 hours to obtain white crystals of LiFSI (the composition of Comparative Example 1) (yield: 65.4 g).

For the composition of Comparative Example 1, ¹⁹F-NMR measurement was performed, and the content of LiFSI and LiFSO₃ was obtained by the internal standard method, as for the compositions of Examples 1 to 3. The results are shown in Table 1. In Table 1, "N.D." indicates that a compound of interest was not detected.

**[Table 1]**

| | Example 1 | Example 2 | Example 3 | Comparative Example 1 |
|---|---|---|---|---|
| LiFSI/% by mass | 99.2 | 99.3 | 96.8 | 99.3 |
| LiFSO₃/ppm by mass | 5000 | 2500 | 14100 | N.D. |

The compositions of Examples 1 to 3 and Comparative Example 1 were each charged into a mixed solvent at room temperature obtained by mixing ethylene carbonate and ethyl methyl carbonate at a volume ratio of 3:7, and stirred by a touch mixer for 10 minutes and dissolved to prepare a solution. Whether the composition was dissolved or not was visually confirmed. After each solution was allowed to stand overnight, and bubbles disappeared, the solution was prepared at room temperature using a graduated cylinder, so that the concentration of LiFSI was 1 M.

### [Measurement of Filtration Time]

For 10 mL of each of the solutions of Examples 1 to 3 and Comparative Example 1, pressure filtration was performed at a pressure of 0.1 MPa using a PTFE membrane filter (ADVANTEC: H020A047A) having a pore diameter of 0.2 µm and a filtration area of 47 mm φ, and the time required until all the solution passed through the PTFE membrane filter (filtration time) was measured. The results are shown in Table 2.

Similarly, filtration was performed with the amount of the solution changed to 20 mL and 50 mL, and the measurement of filtration time was performed. The results are shown in Table 2.

After the 50 mL filtration experiment was performed, the insoluble particles remaining on the membrane filter were washed by passing them through 100 mL of ethyl methyl carbonate. After the washing, the membrane filter was removed, and the removed membrane filter was dried in a vacuum drying furnace at 80°C for 12 hours. The mass of the membrane filter after the drying was measured, and from the difference from the mass of the membrane filter before the filtration, the amount of insoluble matter was measured. From the mass of the composition used for the preparation of the solution, the content of insoluble particles in the composition was calculated. The results are shown in Table 2.

**[Table 2]**

| | | Example 1 | Example 2 | Example 3 | Comparative Example 1 |
|---|---|---|---|---|---|
| Filtration time/s | 10 mL | 189 | 140 | 66 | 258 |
| | 20 mL | 892 | 445 | 232 | 1119 |
| | 50 mL | 5500 | 1670 | 1270 | 6538 |
| Insoluble particles/mg /ppm by mass | | 62.7 | 49.6 | 1.5 | 5.2 |
| | | 6700 | 5300 | 200 | 600 |

### [Particle Diameter Measurement]

The insoluble particles of each of Examples 1 to 3 were separated from the membrane filter, 250 samples each were extracted at random, and the particle diameters were measured. SEM (scanning electron microscope) observation was performed using TM3030 plus Miniscope manufactured by Hitachi, Ltd., the dimensions of the insoluble particles were measured based on the obtained SEM image, and the particle diameters of the insoluble particles were obtained by conversion from the magnification of the image. At this time, the dimension along the longest direction of the insoluble particle was taken as the particle diameter. The average value (average particle diameter), maximum value (maximum particle diameter), and minimum value (minimum particle diameter) of the particle diameters of the 250 samples are shown in Table 3.

The insoluble particles of Comparative Example 1 were difficult to separate from the membrane filter and recover. Therefore, the insoluble particles were recovered by the following method.

First, the composition of Comparative Example 1 was dissolved in the above mixed solvent so that the concentration of LiFSI was 2.5 M, to prepare 100 mL of a solution. The prepared solution was divided into two 50 mL centrifugation tubes, and centrifugation was performed at 2500 rpm by a centrifuge (manufactured by KUBOTA CORPORATION, model number 5420) for 12 hours.

The supernatant was removed, ethyl methyl carbonate was added, centrifugation was performed at a number of revolutions of 2500 rpm for 1 hour, and the washing of the insoluble particles was performed. This operation was repeated five times, and then the recovered insoluble particles were dried in a vacuum drying furnace at 80°C for 12 hours.

For the insoluble particles after the drying, the particle diameters were measured as in Examples 1 to 3. The results are shown in Table 3.

**[Table 3]**

| | Example 1 | Example 2 | Example 3 | Comparative Example 1 |
|---|---|---|---|---|
| Average particle diameter/µm | 27.2 | 36.1 | 83.4 | 1.4 |
| Maximum particle diameter/µm | 53.7 | 82.2 | 127.0 | 3.3 |
| Minimum particle diameter/µm | 7.2 | 11.2 | 54.8 | 0.6 |

The insoluble particles of Examples 1 to 3 have a relatively large particle diameter, and it is considered that the gaps are large in the deposited layer formed by the insoluble particles depositing on the membrane filter. Therefore, it is considered that the clogging of the membrane filter did not occur.

On the other hand, the insoluble particles of Comparative Example 1 were a fine powder in which the particle diameter was very small compared with the insoluble particles of Examples 1 to 3. Therefore, it is considered that the insoluble matter deposited on the membrane filter without gaps to cause clogging, and thus the filtration time became long.

10 mg of each of the compositions of Examples 1 to 3 was added to 40.00 g of the above mixed solvent to prepare a solution. The obtained solution was placed in a centrifugation tube, and 12 hours of centrifugation at 2500 rpm was performed using the above centrifuge. The supernatant was recovered, and then washing was performed with ethyl methyl carbonate. This treatment was repeated three times, the insoluble particles after the washing were recovered, and vacuum drying was performed in a vacuum drying furnace at 80°C for 12 hours. When the mass of the insoluble particles after the drying was measured, 4 mg or more of the insoluble particles were recovered from the composition of any of Examples 1 to 3. When compared with the content of the insoluble particles in the above-described compositions, the solubility of this insoluble matter in the mixed solvent was 150 ppm or less.

### <Reference Example 1>

### [Synthesis of Composition (Lithiation)]

1199.78 g (6.62 mol) of HFSI and 176.24 g (6.79 mol) of lithium fluoride were each measured and charged into a 2 L reactor made of a metal. The reaction solution was heated at atmospheric pressure (1013 hPa) to 150°C to perform a reaction. Then, the pressure was reduced to 10 kPa, and while nitrogen was blown at a flow rate of 1 L/min, devolatilization treatment was performed at 145 to 150°C for 8 hours. The reaction solution was pressure-fed in a molten state, and 982.55 g of a composition including LiFSI as the main component was recovered in a container under a nitrogen atmosphere having a dew point of -78°C.

For the obtained composition, ¹⁹F-NMR measurement was performed under the above conditions, and the content of LiFSI and LiFSO₃ in the composition was obtained by the above-described internal standard method. The analytical values are shown in Table 4.

### [Measurement of Water Content]

The amount of water included in the composition obtained in the above Reference Example 1 was measured using a Karl Fischer water measuring apparatus (AQ-2000, manufactured by Hiranuma Sangyo Co., Ltd.). A series of operations such as the measurement of water content were performed in a dry room (temperature: 25°C, dew point: -70°C to - 50°C). The sample charge was 3 g, 125 ml of "HYDRANAL (registered trademark) Aqualyte RS-A" (manufactured by KANTO CHEMICAL CO., INC.) was used for the generation liquid, and "HYDRANAL (registered trademark) Aqualyte CN" (manufactured by KANTO CHEMICAL CO., INC.) was used for the counter electrode liquid. The sample was measured after the solid was directly charged into the generation liquid, and stirred and dissolved.

### [Ion Chromatography Analysis Method]

0.01 g of the composition obtained in Reference Example 1 was diluted 100 times with super-dehydrated methanol (water content 3 ppm by mass) to form a measurement solution, and SO₄²⁻ ions included in the composition were measured under the following measurement conditions using an ion chromatography system (ICS-3000, manufactured by Nippon Dionex K.K.). The measurement result is shown in Table 4.

### [Measurement Conditions]

Separation mode: ion exchange
Eluent: 7 to 20 mM KOH aqueous solution
Detector: electrical conductivity detector
Column: column for anion analysis: Ion PAC AS-17C (manufactured by Nippon Dionex K.K.)

### [Measurement of pH]

0.5 g of the composition obtained in the above Reference Example 1 was taken as a sample, and this was dissolved in ultrapure water and diluted in a volumetric flask to 50 mL. The initial pH at the time point when titration was started with a 0.01 N NaOH methanol solution using an automatic titration apparatus COM-1700A (COM-1700A, manufactured by Hiranuma Sangyo Co., Ltd.) was read. The measurement result is shown in Table 4.

### [Storage Stability Test of Composition]

### <Reference Example 2>

10 g of the composition obtained in Reference Example 1 was pulverized into particles having a diameter of 1 to 4 mm, placed in an Al laminate bag and sealed, and then stored at 40°C for 2 weeks. The results of analyzing the components as in Reference Example 1 for the recovered composition are shown in Table 4.

### <Reference Example 3>

10 g of the composition obtained in Reference Example 1 was pulverized into particles having a diameter of 1 to 4 mm, and then allowed to stand under an atmosphere having a dew point of -60°C for 60 hours. The water content was 11 ppm. This was placed in an Al laminate bag and sealed, and stored at 40°C for 2 weeks. The results of analyzing the components as in Reference Example 1 for the recovered composition are shown in Table 4.

### <Reference Comparative Example 1>

10 g of the composition obtained in Reference Example 1 was pulverized into particles having a diameter of 1 to 4 mm, and then allowed to stand under an atmosphere having a dew point of -40°C for 60 hours. The water content was 111 ppm. This was placed in an Al laminate bag and sealed, and stored at 40°C for 2 weeks. The results of analyzing the components as in Reference Example 1 for the recovered composition are shown in Table 4.

### <Reference Comparative Example 2>

10 g of the composition obtained in Reference Example 1 was pulverized, and pulverized to 250 µ or less, and then allowed to stand under an atmosphere having a dew point of -60°C for 60 hours. The water content was 36 ppm. This was placed in an Al laminate bag and sealed, and stored at 40°C for 2 weeks. The results of analyzing the components as in Reference Example 1 for the recovered composition are shown in Table 4.

**[Table 4]**

| | Reference Example 1 | Reference Example 2 | Reference Example 3 | Reference Comparative Example 1 | Reference Comparative Example 2 |
|---|---|---|---|---|---|
| Water content/ppm by mass | 4 | 4 | 11 | 111 | 36 |
| LiFSI/% by mass | 98.9 | 98.9 | 98.9 | 98.9 | 98.9 |
| LiFSO₃/% by mass | 0.59 | 0.59 | 0.60 | 0.58 | 0.59 |
| pH | 5.3 | 5.4 | 5.2 | 4.5 | 5.0 |
| Amount of SO₄²⁻/ppm by mass | 4 | 29 | 25 | 1780 | 120 |

Three lots of LiFSI compositions were produced by a method similar to that of Example 1. For the compositions of the lots produced (Examples 4 to 6 respectively), the content and particle size distribution, such as average particle diameter, of insoluble particles were measured by the following methods.

In other words, the composition of each lot was dissolved in the above mixed solvent so that the concentration of LiFSI was 2.5 M, to prepare 100 mL of a solution. The prepared solution was divided into two 50 mL centrifugation tubes, and centrifugation was performed at 2500 rpm by the above centrifuge for 12 hours.

The supernatant was removed, ethyl methyl carbonate was added, centrifugation was performed at a number of revolutions of 2500 rpm for 1 hour, and the washing of the insoluble particles was performed. This operation was repeated five times, and then the recovered insoluble particles were dried in a vacuum drying furnace at 80°C for 12 hours.

The total amount of the insoluble particles which were the insoluble particles recovered after the drying was measured. In addition, the insoluble particles were dispersed in acetone, the dispersion was observed by a laser microscope (KEYENCE VK-9700), 1000 insoluble particles were extracted at random, the particle diameters were measured, and the average particle diameter, the maximum particle diameter, and the minimum particle diameter were measured. The content of insoluble particles of 5 µm or less was calculated by multiplying the total amount of the recovered insoluble particles by the proportion of particles having a particle diameter of 5 µm or less among the 1000 particles whose particle diameters were measured. The results are shown in Table 5.

For the particle diameter of the particle, the particle diameter of each particle in the length direction was measured.

**[Table 5]**

| | Insoluble particles (5 µm or less) (ppm by mass) | Average particle diameter (µm) | Maximum particle diameter (µm) | Minimum particle diameter (µm) |
|---|---|---|---|---|
| Example 4 | 980 | 22.6 | 81.0 | 0.30 |
| Example 5 | 1881 | 22.6 | 92.0 | 0.26 |
| Example 6 | 1469 | 25.7 | 92.0 | 0.20 |

## Claims

1. A composition comprising:
lithium bis(fluorosulfonyl)imide; and
an impurity, wherein
when the composition is dissolved in a mixed solvent obtained by mixing ethylene carbonate and ethyl methyl carbonate at a volume ratio of 3:7, to prepare a solution having a concentration of the lithium bis(fluorosulfonyl)imide of 1 M, and 50 mL of the solution is pressure-filtered at a pressure of 0.1 MPa using a membrane filter having a pore diameter of 0.2 µm and a filtration area of 47 mm φ, insoluble particles having an average particle diameter of 5 to 150 µm remain on the membrane filter.

2. The composition according to claim 1, wherein an amount of the insoluble particles remaining on the membrane filter is 1 to 20000 ppm by mass based on a total amount of the composition.

3. The composition according to claim 1 or 2, wherein the insoluble particles comprise lithium fluoride.

4. The composition according to any one of claims 1 to 3, wherein a content of insoluble particles having a particle diameter of 5 µm or less is 5000 ppm by mass or less based on the total amount of the composition.

5. A composition comprising:
lithium bis(fluorosulfonyl)imide; and
lithium fluoride particles, wherein
an average particle diameter of the lithium fluoride particles is 5 to 150 µm.
